# EUROPÄISCHE PATENTSCHRIFT

(11) **EP 0 505 603 B1**
(45) Veröffentlichungstag und Bekanntmachung des Hinweises auf die Patenterteilung: **21.06.1995**
(21) Anmeldenummer: 91105066.4
(22) Anmeldetag: 28.03.1991
(51) Int. Cl.: G07F 7/10, G11C 29/00

(54) **Verfahren zum Testen eines Datenspeichers und zugehörigen Schutzspeichers und Anordnung zur Durchführung des Verfahrens**
Method for testing a data memory having an associated protection memory and a circuit arrangement carrying out said method
Procédé et dispositif de test d'une mémoire de données munie d'une mémoire à protection

(43) Veröffentlichungstag der Anmeldung: 30.09.1992
(73) Patentinhaber: SIEMENS AKTIENGESELLSCHAFT, 80333 München (DE)
(72) Erfinder: Schrenk, Hartmut, W-8013 Haar (DE)

(56) Entgegenhaltungen:
- EP-A- 0 186 051
- EP-A- 0 223 188
- FR-A- 2 608 809

## Beschreibung

Die Erfindung betrifft ein Testverfahren und eine Anordnung zur Durchführung eines Testverfahrens für einen Datenspeicher, welcher n Speicherzellen, welche in q Zeilen und p Spalten organisiert sind, beinhaltet, wobei jede Speicherzelle m Bits aufweist, und einen zugehörigen Schutzspeicher, welcher k Schutzspeicherzellen enthält, wobei jede Schutzspeicherzelle mindestens einer Speicherzelle zugeordnet ist, wobei jede Schutzspeicherzelle mindestens 1 Bit aufweist, sowie einer Prüfeinrichtung.

Das Testen von Halbleiterspeichern ist seit längerem bekannt und wird z.B. in der EP-A-0 186 051 beschrieben. Die verschiedensten Testmethoden sind bekannt um beim Testen eines Halbleiterspeichers einen möglichst geringen Zeitaufwand zu erzielen. Diese Testverfahren sind meistens für handelsübliche dynamische oder statische Speicher entwickelt worden. Neuere Entwicklungen auf dem Speichergebiet stellen sogenannte Chipkarten oder Chipschlüssel dar. Diese können z.B. in Abbuchungssystemen oder bei Systemen mit Zugangskontrolle und dergleichen verwendet werden. Ein Speicher ist hier innerhalb einer scheckkartengroßen Chipkarte untergebracht und speichert individuelle Daten des jeweiligen Benutzers oder individuelle Systeminformationen. Diese können beliebig gesichert werden um so das Verändern der Daten durch den Benutzer oder durch fremde Personen zu verhindern. Mit derartigen Chipkarten oder Chipschlüsseln sind die vielseitigsten Anwendungen denkbar.

Das Testen eines derartigen Speichers stellt aber Probleme dar, da der Schutzspeicher nicht wie die üblichen Speicher beliebig löschbar ist, um so seine Schutzfunktion zu gewährleisten. Ein derartiger Speicher ist meistens in zwei Blöcke unterteilt. Der erste Block beinhaltet den eigentlichen Datenspeicher und der zweite Block den zugehörigen Schutzspeicher. Ein Datenspeicher kann z.B. in 1024 Worte zu 8 Bit organisiert sein. Jedem Wort des Datenspeichers ist nun ein zusätzliches Bit im Schutzspeicher zugeordnet. Dieser Schutzspeicher wäre dementsprechend z.B. zu 1024 x 1 Bit organisiert. Der Schutzspeicher kann aber auch so organisiert sein, daß eine Schutzspeicherzelle einen Datenspeicherblock beliebiger Größe zugeordnet ist. Die durch die Schutzspeicherzelle definierte Schutzfunktion gilt dann für jede Speicherzelle des jeweiligen Datenspeicherblocks.

Die Datenübertragung von und zur Chipkarte bzw. Chipschlüssel erfolgt über ein Schreib-Lesegerät. Die Chipkarte oder der Chipschlüssel werden dabei z.B. in einen Schlitz des Schreib-Lesegeräts eingeführt. Die Chipkarte oder der Chipschlüssel können z.B. Kontakte aufweisen, die vom Schreib-Lesegerät kontaktiert werden und zur Datenübertragung sowie zur Energieübertragung dienen. Eine weitere Möglichkeit besteht in der kontaktlosen Übertragung von Daten und Energie. Diese erfolgt z.B. über ein Spulenpaar. Ein derartiges System ist z.B. aus der DE-C2-34 47 560 bekannt. Eine kontaktaufweisende Chipkarte besitzt z.B. fünf Kontakte gemäß dem Iso-Standard für Chipkarten. Diese Kontakte ermöglichen eine serielle Datenübertragung von und zur Chipkarte. Ebenso wird bei der kontaktlosen Chipkarte bzw. Chipschlüssel eine serielle Datenübertragung verwendet. Die Datenübertragung erfolgt in beiden Fällen mit einer relativ niedrigen Taktrate. Da jede Speicherzelle einzeln getestet werden muß, entstehen so für den Datenspeicher extrem lange Testzeiten, da zum Testen einer Speicherzelle der Testbefehl, die Speicheradresse sowie das Testdatenwort seriell Schreib-Lesegerät zur Chipkarte bzw. Chipschlüssel übertragen werden müssen.

Ein weiteres Problem stellt der Schutzspeicher dar. Im Normalbetrieb der Chipkarte bzw. des Chipschlüssels kann dieser wenn er einmal geschrieben wurde nicht mehr gelöscht werden. Das heißt, sollte ein Schutzbit gesetzt sein, so geschieht dies irreversibel. Es bestehen lediglich zwei Möglichkeiten, den Schutzspeicher beliebig zu beschreiben und zu löschen. Die erste Möglichkeit ist vor der Montage des Chips, also noch auf der Scheibe gegeben. Hier sind sogenannte Sicherungen eingebaut, die beim Trennen der einzelnen Chips von der Scheibe zerstört werden. Desweiteren können sogenannte Sicherungen vorgesehen sein, die z.B. durch einen vordefinierten Strom durchgebrannt werden können. Solange eine solche Sicherung nicht zerstört ist, kann der Schutzspeicher beliebig beschrieben und gelöscht werden. Weiterhin besteht die Möglichkeit eines zusätzlichen Pads, an dem ein bestimmtes Signal z.B. 5 V angelegt werden müssen und welches im montierten Zustand nicht kontaktiert ist. Selbstverständlich können alle diese Möglichkeiten miteinander kombiniert werden, so daß z.B. ein Testen des Schutzspeichers nur bei Vorliegen aller vorstehenden Bedingungen erfüllt ist.

Aufgabe der Erfindung ist es, ein Testverfahren und eine Anordnung zur Durchführung des Testverfahrens für einen Datenspeicher und zugehörigen Schutzspeicher anzugeben, daß eine möglichst kurze Testzeit ermöglicht.

Diese Aufgabe wird gelöst durch die kennzeichnenden Merkmale des Anspruchs 1. Weiterbildungen sind Kennzeichen der Unteransprüche.

Vorteil des erfindungsgemäßen Testverfahrens ist, daß der Daten- und Schutzspeicher einer beweglichen Einheit auf einfache Weise getestet werden kann. Ein solcher Test besteht üblicherweise aus dem Programmieren eines Prüfmusters in Daten- und Schutzbitspeicher und der anschließenden Überprüfung des Speicherinhaltes. Beim Programmieren lassen sich über eine geeignete Prüfvorrichtung größere Speicherbereiche gleichzeitig adressieren und mit einem Prüfmuster versehen. Das Prüfmuster des Schutzbitspeichers wird dabei erfindungsgemäß aus dem eingegebenen Prüfbefehl extrahiert, der aus einem Prüfdatenwort und einer Adresse besteht. Beim Überprüfen eines einprogrammierten Prüfmusters müssen die Speicherstellen einzeln adressiert werden. Die Referenz für den Schutzbitspeicher wird erfindungsgemäß aus dem Referenzwort des Datenspeichers adressiert. Dazu gehört erfindungsgemäß eine Prüfvorrichtung, die eine besonders schnelle Adressierung aller Speicherstellen und eine schnelle Erkennung des Vergleichsergebnisses ermöglicht. Dabei können verschiedenste Verfahren, wie z.B. der Schachbrettmustertest oder das zeilenweise oder blockweise Testen von Speicherzellen verwendet werden. Außerdem sind sämtliche Testverfahren auch mit erhöhter bzw. herabgesetzter Lesespannung möglich.

Die Erfindung wird nachfolgend anhand von zwei Figuren näher erläutert. Es zeigen:
- Figur 1: eine Anordnung zur Durchführung des erfindungsgemäßen Testverfahrens,
- Figur 2: eine ausschnittsweise Darstellung der Belegung des Daten- und Schutzspeichers bei einem erfindungsgemäßen Schachbrettmustertest.

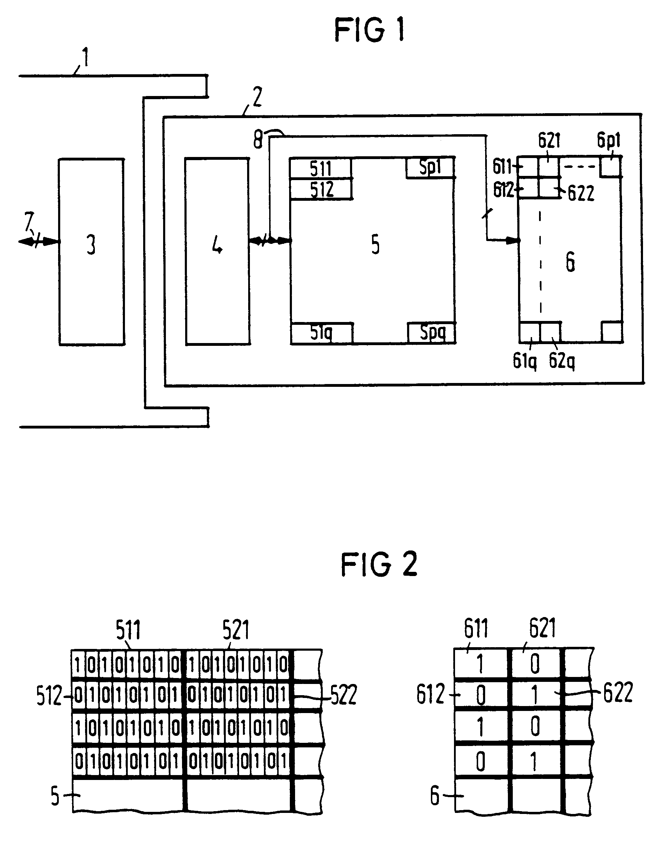

Figur 1 zeigt eine Schreib-Leseeinheit 1 und eine ihr zugeführte bewegliche Einheit 2. Diese kann z.B. eine Chipkarte oder ein Chipschlüssel sein. Die Schreib-Leseeinheit 1 weist eine Funktionseinheit 3 zur Daten- bzw. Energieübertragung auf, welche über einen bidirektionalen Bus 7 mit weiteren Funktionseinheiten, wie z.B. Mikroprozessor, Massenspeicher, diverse Interfaces verbunden ist. Der Bus 7 enthält sämtliche notwendigen Daten-, Adress- und Steuerleitungen. Ebenso enthält die bewegliche Einheit 2 zum Empfangen der übertragenen Energie und zum Empfangen bzw. Übertragen von Daten eine Funktionseinheit 4. Diese ist ebenfalls über einen Bus 8 mit einem Datenspeicher 5 und einem Schutzspeicher 6 verbunden. Der Datenspeicher ist in q-Zellen und p-Spalten organisiert und enthält insgesamt n-Speicherzellen 511...5pq. Jede dieser Speicherzellen 511.. 5pq weist m Bits auf. Der Schutzspeicher 6 ist in ähnlicher Weise aufgebaut. Er besteht einer ebenfalls aus n Speicherzellen 611...6pq, die in q Zeilen und p Spalten organisiert sind. Die Speicherzellen 611..6pq bestehen jeweils aus einem Bit.

Zum Testen des Datenspeichers 5 und des zugehörigen Schutzspeichers 6 sendet nun die stationäre Schreib-Leseeinheit 1 einen Prüfbefehl mit zugehörigem Prüfdatenwort und Adresse an die bewegliche Einheit 2. Die im Funktionsblock 4 enthaltene Prüfeinrichtung extrahiert nun aus dem Prüfdatenwort für den Datenspeicher 5 das Prüfdatenbit für den Schutzspeicher 6. Dies kann z. B. derart erfolgen, daß das LSB des Prüfdatenwortes als Prüfdatenbit für den Schutzspeicher herangezogen wird. Es könnte aber auch jedes andere Bit des Prüfdatenwortes dazu hergenommen werden. Das Muster der in den Schutzbitspeicher einzuschreibenden Information kann erfindungsgemäß auch aus einer mit dem Prüfbefehl eingegebenen Prüfadresse festgelegt werden.

Daraufhin wird nun die adressierte Speicherzelle mit dem Prüfdatenwort und die zugehörige Schutzspeicherzelle mit dem extrahierten Prüfdatenbit beschrieben. Daraufhin werden die soeben beschriebenen Speicherzellen von der Prüfeinrichtung wieder gelesen und mit dem zuvor geschriebenen Prüfdatenwort bzw. Prüfdatenbit verglichen. Stimmen geschriebene und gelesene Inhalte der Speicherzellen nicht überein, so wird ein Fehlersignal an die stationäre Einheit 1 übermittelt.

Mit speziellen Prüfbefehlen für das Schreiben von Blöcken oder des gesamten Speichers und für das Auslesen eines größeren Speicherbereiches kann der gesamte Speicher auf oben beschriebene Weise getestet werden. Die Prüfeinrichtung erkennt den übermittelten Befehl, der aus einer Steuer-, einer Adreß- und einer Dateninformation bestehen kann. Erfindungsgemäß werden beim Testen von Blockbereichen des Speichers, von einzelnen Zeilen oder Spalten sowie vom gesamten Speicher alle zu testenden Speicherzellen gleichzeitig beschrieben. Das Schreiben erfolgt also innerhalb von einem Schreibzyklus. Das Lesen und Vergleichen der zu testenden Speicherzellen muß selbstverständlich für jede Speicherzelle getrennt durchgeführt werden. Lediglich eine Speicherzelle des Datenspeichers und die zugehörige Schutzspeicherzelle können erfindungsgemäß gleichzeitig gelesen und verglichen werden.

Dies beschleunigt das Testverfahren erheblich, da allein schon zur Übermittlung eines Befehls, wenn dieser z. B. aus a Bits besteht, a Taktimpulse notwendig sind. Sollte nun jede Speicherzelle und zugehörige Schutzspeicherzelle zum Testen einzeln von der stationären Schreib-Leseeinheit 1 adressiert werden, so muß jedesmal ein Befehl bestehend aus a Bits übertragen werden. Im obenbeschriebenen Verfahren ist nur ein einziger Befehl zum Testen eines Blocks bzw. des gesamten Speichers notwendig. Nach Übermittlung dieses aus a Bits bestehenden Befehls wird zuerst der zu testende Bereich geschrieben und dann mit jedem Taktimpuls eine Speicherzelle gelesen und mit einem Referenzwert verglichen.

Um eine schnelle Adressierung aller Speicherzellen zu ermöglichen, ist erfindungsgemäß eine Autoinkrementierung der Adresse über die Prüfvorrichtung vorgesehen. Das Ergebnis eines Lesevorganges der Bits einer Speicherzelle und des dazugehörenden Schutzspeicherbits wird ebenfalls erfindungsgemäß in einem einzigen Ergebnisbit zusammengefaßt, dessen logischer Zustand das Gut-Schlecht-Ergebnis des betreffenden Lesevorgangs charakterisiert. Beim ersten Auftreten eines Schlechtergebnisses wird ebenfalls erfindungsgemäß ein Ergebnisflag gesetzt, an dessem Zustand bei Testende das Auftreten enes Einzelfehlers gespeichert bleibt.

Erfolgt die Funktionssteuerung innerhalb einer beweglichen Einheit taktgesteuert, so wird mit jedem Taktimpuls eine Speicherzelle adressiert, getestet und das Vergleichsergebnis sichtbar gemacht.

Besteht der Speicher z.B. aus 1024 Byte Datenspeicher und 1024 Bit Schutzspeicher, so sind zum vollständigen Testen des Speichers ca. 1024 Taktimpulse plus a Taktimpulse für den Testbefehl notwendig. Im Gegensatz dazu wäre bei Einzeladressierung ca. a x 1024 Taktimpulse notwendig. Sollte während des Testverlaufs eine fehlerhafte Speicherzelle entdeckt werden, so wird eine Fehlermeldung an die stationäre Einheit übermittelt. Dies kann z.B. dadurch geschehen, daß der Datenausgang von 1 nach 0 oder umgekehrt bei Erkennen eines Fehlers geht.

Ein besonders schneller Test des gesamten Datenspeichers und zugehörigen Schutzspeichers bietet der sogenannte Schachbrettmustertest. Hierbei werden abwechselnd nebeneinanderliegende Speicherzellen mit entgegengesetzter Dateninformation beschrieben. Ein derartiges Muster ist ausschnittsweise in Figur 2 dargestellt. Figur 2 zeigt dabei Teile des Datenspeichers 5 und des zugehörigen Schutzspeichers 6. Ebenfalls ist der Inhalt beider Speicher 5, 6 nach dem Schreiben eines Schachbrettmusters dargestellt. So erhält die Speicherzelle 511 des Datenspeichers 5 z.B. den Wert 10101010 und die zugehörige Schutzbitspeicherzelle 6ll den Wert 1. Wie zu sehen ist, enthalten sämtliche innerhalb einer Zeile befindlichen Speicherzellen des Datenspeichers 5 das gleiche Prüfdatenwort. Jeweils Speicherzellen benachbarter Zeilen, also z.B. 5p1 und 5p2 sind dabei mit zueinander entgegengesetzter Information beschrieben. So enthalten z.B. die Speicherzellen 511...5p1 der ersten Zeile des Datenspeichers 5 in Figur 2 das Testdatenwort 10101010 und die Speicherzellen 512...5p2 der zweiten Zeile das invertierte Testdatenwort 01010101. Selbstverständlich sind auch andere Testdatenwörter denkbar, so würde beispielsweise das Testdatenwort 11110000 ein "größeres Schachbrettmuster" erzeugen. Die Auswahl bleibt aber dem Anwender überlassen und sollte an die Struktur des Speichers angepasst werden, um so ein optimales Testergebnis und damit eine optimale Funktionssicherheit des Speichers zu erreichen.

Im Gegensatz zu den Speicherzellen des Datenspeichers 5 sind die Speicherzellen einer Zeile im Schutzspeicher 6 jeweils alternierend mit 1 oder 0 beschrieben. Jeweils benachbarte Zeilen des Schutzspeichers 6 sind ebenso wie beim Datenspeicher 5 mit entgegengesetzter Information behaftet. So ist z.B. der Inhalt der ersten Zeile des Schutzspeichers 6 in Figur 2 mit 1,0,1... und der Inhalt der zweiten Zeile mit 0,1,0... angegeben.

Der Schachbrettmustertest wird mittels dreier Befehle ermöglicht, nachdem der gesamte Speicher 5, 6 gelöscht wurde. Die Prüfeinrichtung in der Funktionseinheit 4 der beweglichen Einheit 2 ermöglicht diesen Test indem sie nach Empfangen des ersten Befehls die Speicherzellen der ungeradzahligen Zeilen mit dem übermittelten Prüfdatenwort beschreibt und nach Empfangen des zweiten Befehls die Speicherzellen der geradzahligen Zeilen mit dem mit dem zweiten Befehl übermittelten Prüfdatenwort beschreibt. Für den Schachbrettmustertest ist dieses zweite Prüfdatenwort das invertierte Prüfdatenwort für die ungeradzahligen Zeilen. Die Prüfeinrichtung extrahiert nun aus dem Prüfdatenwort für den Datenspeicher in oben beschriebener Weise das Prüfdatenbit für die erste Schutzbitspeicherzelle aller ungeradzahligen bzw. geradzahligen Zeilen. Die folgenden Speicherzellen einer Zeile ergeben sich, wie folgt: Die Zellen werden alternierend mit zum Inhalt der vorhergehenden Zelle invertierten Prüfdatenbit beschrieben. Ist das für die erste Zelle extrahierte Prüfbit z. B. eine 1, so ergibt sich für die Zeile ein Dateninhalt von 1,0,1,0...usw.

Die Prüfeinrichtung ermöglicht nun erfindungsgemäß das gleichzeitige Schreiben aller Speicherzellen in den geradzahligen bzw. ungeradzahligen Zeilen sowie der zugehörigen Schutzspeicherzellen. D. h. mit jedem Befehl des Schachbrettmustertests werden die Hälfte aller Speicherzellen des Datenspeichers 5 und des Schutzspeichers 6 gleichzeitig beschrieben. Dies ermöglicht eine erfindungsgemäße Prüfeinrichtung, die zum Schreiben alle Speicherzellen des Daten- und Schutzspeichers der geradzahligen bzw. ungeradzahligen Zeilen gleichzeitig adressiert. Sie enthält alle notwendigen Register und logischen Elemente, wie z. B. Zeilen und Spaltendekoder, die zum gleichzeitigen Schreiben der Zellen notwendig sind. Dabei kann im wesentlichen auf die bereits für den Normalbetrieb des Speichers notwendigen Dekoder zurückgegriffen werden. Lediglich zum gleichzeitigen Schreiben der Speicherzellen sind u.U. zusätzliche Dekoder notwendig.

Nach erfolgtem Schreiben des Schachbrettmusters erfolgt ebenfalls mit dem dritten Testbefehl das Auslesen der zuvor beschriebenen Speicherzellen des Datenspeichers und des Schutzspeichers sowie ein Vergleich mit dem jeweiligen Referenzwert. Bei fehlender Übereinstimmung wird dann wie oben beschrieben ein Fehlersignal erzeugt.

Beim Lesen der Speicherzellen des Datenspeichers 5 und des Schutzspeichers 6 muß selbstverständlich jede Speicherzelle des Datenspeichers 5 und die zugehörige Schutzzelle einzeln ausgelesen werden und mit dem Referenzwert verglichen werden. Dabei wird wiederum aus dem im dritten Testbefehl enthaltenen Referenzwert für den Schutzspeicher notwendige Referenzwert extrahiert. Für den oben beschriebenen Fall eines 8 Bit breiten Datenworts und eines 1 Bit breiten Schutzbits werden also jeweils 9 Bit des ermittelten Referenzwerts mit 9 Bit der gelesenen Speicherzelle des Datenspeichers sowie der zugehörigen Schutzspeicherzelle miteinander verglichen. Bei Taktsteuerung wird nun mit jedem Taktimpuls die Speicherzellenadresse um 1 erhöht und so alle Zellen des gesamten Speichers 5, 6 mit dem Referenzwert verglichen. Dabei steuert die Prüfeinrichtung den Vergleich mit dem Referenzwert derart, daß innerhalb einer Zeile des Datenspeichers und zugehörigen Schutzspeichers der Referenzwert für die Datenspeicherzellen gleich bleibt. Bei jedem Zeilenwechsel wird der Referenzwert für die Datenspeicherzellen dieser Zeile invertiert. Da der Referenzwert für die Schutzzellen einer Zeile aus dem Referenzwert für die Datenspeicherzellen extrahiert wird, ist hier ein Invertieren des Referenzwerts bei einem Zeilenwechsel für den Schutzspeicher nicht notwendig. Vielmehr muß innerhalb einer Zeile bei jeder Erhöhung der Speicherzellenadresse der Referenzwert für die Schutzspeicherzelle invertiert werden. Die erste Speicherzelle des Schutzspeichers wird also mit dem aus dem Referenzwert der zugehörigen Datenspeicherzelle extrahierten Referenzwert verglichen, die nächstfolgende Schutzspeicherzelle mit dem dazu invertierten Referenzwert u.s.w., so daß auch im Schutzspeicher ein Schachbrettmuster verglichen wird.

Eine weitere Möglichkeit, um fehlerhafte Speicherzellen frühzeitig zu erkennen, bietet das Testen mit erhöhter oder herabgesetzter Betriebsspannung. Dies kann in Verbindung mit den obenbeschriebenen Testverfahren verwendet werden. Nach einem Löschen einzelner Speicherzellen oder des gesamten Speichers kann z.B. der Speicher bei erhöhter Lesespannung ausgelesen werden. Dasselbe Verfahren kann bei Schreiben einer oder mehrerer Speicherzellen mit beim nachfolgenden Lesen herabgesetzter Lesespannung erfolgen. Gegenüber dem Normalpegel ist also ein Prüfvorhalt beim Lesen der Speicherzellen sichergestellt.

Die Prüfeinrichtung kann weiterhin z.B. ein Testregister aufweisen, welches, wenn es noch nicht gesetzt ist, den Testbetrieb erlaubt. In diesem Zustand kann sowohl der Datenspeicher, wie auch der Schutzspeicher nach obenbeschriebenen Verfahren getestet werden. Nach erfolgreichem Testen wird nun dieses Testregister gesetzt, wobei ein Löschen des Testregisters unmöglich ist. Durch dieses irreversible Setzen des Testregisters ist ein nachfolgendes Testen des Schutzspeichers und damit ein versehentliches Überschreiben von bereits gespeicherten Informationen unmöglich.

Das beschriebene Testverfahren ist nicht auf bewegliche Speicher wie z.B. Chipkarten oder Chipschlüssel beschränkt, wie im vorangehenden Beispiel beschrieben, sondern kann bei allen artverwandten Speichern mit Schutzfunktion verwendet werden. Ebenso muß der Schutzspeicher nicht die gleiche Anzahl von Speicherzellen wie der Datenspeicher aufweisen. Ebenso gut könnten ganze Blockbereiche des Datenspeichers von einer einzigen Schutzspeicherzelle, welche aus einem Bit oder einem Wort besteht, geschützt werden. Das Testverfahren wird dann entsprechend beschleunigt.

## Patentansprüche

1. Testverfahren für einen Datenspeicher (5), welcher n Speicherzellen, welche in q Zeilen und p Spalten organisiert sind, beinhaltet, wobei jede Speicherzelle m Bits aufweist, und einen zugehörigen Schutzspeicher (6), welcher k Schutzspeicherzellen beinhaltet, wobei jede Schutzspeicherzelle mindestens einer Speicherzelle zugeordnet ist, wobei jede Schutzspeicherzelle mindestens ein Bit aufweist, **dadurch gekennzeichnet,** daß
- eine Prüfungseinrichtung (4) vorgesehen ist,
- ein Prüfdatenwort und eine Prüfadresse an die Prüfeinrichtung übermittelt wird,
- mindestens eine durch die Prüfadresse adressierte Speicherzelle mit dem Prüfdatenwort beschrieben wird,
- das Prüfdatenbit für jede zugehörige Schutzspeicherzelle aus mindestens einem der m Bits des übermittelten Prüfdatenwortes oder der Prüfadresse extrahiert wird und mindestens eine zugehörige Schutzspeicherzelle mit dem ermittelten Bit beschrieben wird,
- die beschriebene Speicherzelle und zugehörige Schutzspeicherzelle gelesen werden und mit dem zuvor geschriebenen Prüfdatenwort bzw. Prüfdatenbit verglichen werden,
- bei fehlender Übereinstimmung ein Fehlersignal erzeugt wird.

2. Testverfahren nach Anspruch 1,
**dadurch gekennzeichnet,** daß
- nach Übermittlung des Prüfdatenwortes ein Block bestehend aus i (i ≦ n) Speicherzellen und dazugehörige Schutzspeicherzellen geprüft werden.

3. Testverfahren nach Anspruch 1,
**dadurch gekennzeichnet,** daß
- alle Speicherzellen der ungeradzahligen (q = 1,3,5...) Zeilen mit dem übermittelten Prüfdatenwort gleichzeitig beschrieben werden bzw. alle Speicherzellen der geradzahligen (q = 2 4,6,...) Zeilen mit dem invertierten Prüfdatenwort gleichzeitig beschrieben werden,
- gleichzeitig mit dem Schreiben der Speicherzellen die zugehörigen Schutzspeicherzellen der geradzahligen bzw. ungeradzahligen Zeilen beginnend mit dem ersten Bit jeder Zeile abwechselnd mit dem extrahierten und dem dazu invertierten Prüfbit beschrieben werden,
- daraufhin jede Speicherzelle und Zugehörige Schutzspeicherzelle gelesen werden und mit dem zuvor geschriebenen Prüfdatenwort für die jeweilige Speicherzelle sowie dem daraus extrahierten Prüfbit für die jeweilige Schutzspeicherzelle verglichen werden,
- bei fehlender Übereinstimmung ein Fehlersignal erzeugt wird.

4. Testverfahren nach einem der vorhergehenden Ansprüche,
**dadurch gekennzeichnet,** daß
der Test mit erhöhter Lesespannung erfolgt.

5. Testverfahren nach einem der Ansprüche 1 bis 3,
**dadurch gekennzeichnet,** daß
der Test mit herabgesetzter Lesespannung erfolgt.

6. Anordnung zur Durchführung des Testverfahrens für einen Datenspeicher (5), welcher n Speicherzellen, welche in q Zeilen und p Spalten organisiert sind, beinhaltet, wobei jede Speicherzelle m Bits aufweist, und einen zugehörigen Schutzspeicher (6), welcher k Schutzspeicherzellen beinhaltet, wobei jede Schutzspeicherzelle mindestens einer Speicherzelle zugeordnet ist, wobei jede Schutzspeicherzelle mindestens ein Bit aufweist, nach einem der Ansprüche 1 bis 5,
**dadurch gekennzeichnet,** daß
daß eine Prüfeinrichtung (4) vorgesehen ist, welche dem Datenspeicher (5) und dem Schutzspeicher (6) zugeordnet ist,
daß an die Prüfeinrichtung (4) ein Prüfdatenwort zur Speicherung im Datenspeicher (5) und eine Prüfadresse zur Adressierung des Datenspeichers (5) übertragen wird, und
daß aus dem Prüftdatenwort oder der Prüfadresse ein Prüfbit für den Schutzspeicher (6) extrahiert wird.

7. Anordnung zur Durchführung des Testverfahrens nach Anspruch 6,
**dadurch gekennzeichnet,** daß
Mittel vorgesehen sind, die ein gleichzeitiges Beschreiben mehrerer Speicherzellen und zugehöriger Schutzspeicherzellen ermöglicht.

8. Anordnung zur Durchführung des Testverfahrens nach Anspruch 7,
**dadurch gekennzeichnet,** daß
die Anordnung taktgesteuert ist, und mit jedem Taktimpuls eine Speicherzelle und eine zugehörige Schutzspeicherzelle getestet werden.

9. Anordnung zur Duchführung des Testverfahrens nach Anspruch 7,
**dadurch gekennzeichnet,** daß
Mittel vorgesehen sind, die sowohl im Datenspeicher, wie auch gleichzeitig im Schutzspeicher ein Schachbrettmuster erzeugen.

10. Anordnung zur Durchführung des Testverfahrens nach Anspruch 9,
**dadurch gekennzeichnet,** daß
- die Anordnung taktgesteuert ist,
- die Prüfeinrichtung Mittel enthält, die jeweils alle Speicherzellen der geradzahligen bzw. ungeradzahligen Zeilen des Datenspeichers gleichzeitig zum Schreiben des Prüfdatenworts adressiert,
- die Prüfeinrichtung weitere Mittel enthält, die jeweils gleichzeitig mit dem Schreiben der Speicherzellen die zugehörigen Schutzspeicherzellen der geradzahligen bzw. ungeradzahligen Zeilen, beginnend mit der ersten Schutzspeicherzelle einer Zeile, abwechselnd mit dem extrahierten Prüfbit und dem dazu invertierten Prüfbit beschreibt,
- Vergleichsmittel in der Prüfeinrichtung (4) vorgesehen sind, die den Inhalt jeder Speicherzelle des Datenspeichers und den Inhalt der zugehörigen Schutzspeicher mit dem jeweiligen Prüfdatenwort und dem daraus extrahierten Prüfbit vergleichen,
- weitere Mittel in der Prüfeinrichtung vorgesehen sind, die bei fehlender Übereinstimmung ein Fehlersignal erzeugen.

11. Anordnung zur Durchführung des Testverfahrens nach einem der Ansprüche 8 bis 10,
**dadurch gekennzeichnet,** daß
Mittel zum automatischen Inkrementieren der Speicherzellenadresse vorgesehen sind.

12. Anordnung zur Durchführung des Testverfahrens nach einem der Ansprüche 6 bis 11,
**dadurch gekennzeichnet,** daß
- ein nicht löschbares Testregister vorgesehen ist,
- nur solange das Testregister gelöscht ist, ein Testen der Speicherzellen und der Schutzspeicherzellen möglich ist.

## Claims

1. Test method for a data memory (5) which contains n memory cells, which are organized in q rows and p columns and each memory cell having m bits, and an associated protection memory (6) which contains k protection memory cells, each protection memory cell being assigned to at least one memory cell and each protection memory cell having at least one bit, characterized in that
- a test device (4) is provided,
- a test data word and a test address are transmitted to the test device,
- at least one memory cell which is addressed by the test address has the test data word written into it,
- the test data bit for each associated protection memory cell is extracted from at least one of the m bits of the transmitted test data word or of the test address and the bit determined is written into at least one associated protection memory cell,
- the memory cell which has been written into and the associated protection memory cell are read and are compared with the previously written test data word and test data bit respectively,
- a fault signal is produced if there is no correspondence.

2. Test method according to Claim 1,
characterized in that
- after transmitting the test data word, a block which comprises i (i ≦ n) memory cells and associated protection memory cells is tested.

3. Test method according to Claim 1,
characterized in that
- all the memory cells in the odd-numbered (q = 1, 3, 5 ...) rows have the transmitted test data word written into them simultaneously and all the memory cells in the even-numbered (q = 2, 4, 6, ...) rows have the inverted test data word written into them simultaneously,
- at the same time that the memory cells are written into, the associated protection memory cells in the even-numbered and, respectively, odd-numbered rows have the extracted test bit and the test bit inverted with respect to said extracted test bit written into them alternately starting with the first bit in each row,
- each memory cell and the associated protection memory cell are then read and are compared with the previously written test data word for the respective memory cell and with the test bit extracted therefrom for the respective protection memory cell,
- a fault signal is produced if there is no correspondence.

4. Test method according to one of the preceding claims, characterized in that the test is carried out at an increased read voltage.

5. Test method according to one of Claims 1 to 3,
characterized in that
the test is carried out at a reduced read voltage.

6. Arrangement for carrying out the test method for a data memory (5) which contains n memory cells, which are organized into q rows and p columns and each memory cell having m bits, and an associated protection memory (6) which contains k protection memory cells, each protection memory cell being assigned at least one memory cell, and each protection memory cell having at least one bit, according to one of Claims 1 to 5,
characterized in that
a test device (4) is provided which is assigned to the data memory (5) and to the protection memory (6),
in that a test data word for storage in the data memory (5) and a test address for addressing the data memory (5) are transmitted to the test device (4), and
in that a test bit for the protection memory (6) is extracted from the test data word or the test address.

7. Arrangement for carrying out the test method according to Claim 6,
characterized in that
means are provided which enable simultaneous writing into a plurality of memory cells and associated protection memory cells.

8. Arrangement for carrying out the test method according to Claim 7,
characterized in that
the arrangement is clock-controlled, and a memory cell and an associated protection memory cell are tested with each clock pulse.

9. Arrangement for carrying out the test method according to Claim 7,
characterized in that
means are provided which produce a checkerboard pattern both in the data memory and, simultaneously, in the protection memory.

10. Arrangement for carrying out the test method according to Claim 9,
characterized in that
- the arrangement is clock-controlled,
- the test device contains means which in each case address all the memory cells in the even-numbered rows and odd-numbered rows respectively of the data memory at the same time that the test data word is being written,
- the test device contains further means which in each case alternately write the extracted test bit and the test bit which is inverted with respect to said extracted test bit into the associated protection memory cells of the even-numbered and odd-numbered rows respectively, starting with the first protection memory cell in a row, in each case at the same time that the memory cells are being written into,
- comparison means are provided in the test device (4), which compare the contents of each memory cell of the data memory and the contents of the associated protection memory with the respective test data word and the test bit extracted therefrom,
- further means are provided in the test device, which means produce a fault signal if there is no correspondence.

11. Arrangement for carrying out the test method according to one of Claims 8 to 10,
characterized in that
means are provided for automatically incrementing the memory cell address.

12. Arrangement for carrying out the test method according to one of Claims 6 to 11,
characterized in that
- a non-erasable test register is provided,
- testing of the memory cells and of the protection memory cells is possible only as long as the test register has been erased.

## Revendications

1. Procédé de test d'une mémoire de données (5), qui comporte n cellules de mémoire, qui sont organisées suivant q lignes et p colonnes et dont chacune comporte m bits, et une mémoire de protection associée (6), qui comporte k cellules de mémoire de protection, chaque cellule de mémoire de protection étant associée à au moins une cellule de mémoire, et chaque cellule de protection comportant au moins un bit, caractérisé par le fait
- qu'il est prévu un dispositif de contrôle (4),
- qu'un mot de données de contrôle et une adresse de contrôle sont transmis au dispositif de contrôle,
- qu'au moins une cellule de mémoire adressée au moyen de l'adresse de contrôle est enregistrée avec le mot de données de contrôle,
- que le bit de données de contrôle pour chaque cellule de mémoire de protection associée et constitué par l'un des m bits du mot de données de contrôle transmis ou de l'adresse de contrôle, est extrait, et qu'au moins une cellule de mémoire de protection associée est enregistrée avec le bit déterminé,
- que la cellule de mémoire enregistrée et la cellule de mémoire de protection associée sont lues et qu'une comparaison est exécutée par rapport au mot de données de contrôle ou au bit de données de contrôle déjà enregistré,
- qu'en cas de non-coïncidence, un signal d'erreur est produit.

2. Procédé de test selon la revendication 1, caractérisé en ce que
- après la transmission du mot de données de contrôle, un bloc, constitué par i (i ≦ n) cellules de mémoire et par des cellules de mémoire de protection associées est contrôlé.

3. Procédé de test selon la revendication 1, caractérisé par le fait que
- toutes les cellules de mémoire des lignes impaires (q = 1, 3, 5 ...) sont enregistrées simultanément avec le mot de données de contrôle transmis, et toutes les cellules de mémoire des lignes paires (q = 2, 4, 6, ...)sont enregistrées simultanément avec le mot de données de contrôle inversé,
- en même temps que s'effectue l'enregistrement des cellules de mémoire, les cellules de mémoire de protection associées des lignes paires et des lignes impaires sont enregistrées alternativement, en commençant par le premier bit de chaque ligne, avec le bit de contrôle extrait et avec le bit de contrôle inverse du précédent,
- ensuite chaque cellule de mémoire et la cellule de mémoire de protection associée sont lues et une comparaison est réalisée avec le mot de données de contrôle, enregistré précédemment, pour la cellule de mémoire respective ainsi qu'avec le bit de contrôle, qui en est extrait, pour la cellule de mémoire de protection respective,
- en cas de non-coïncidence, un signal d'erreur est produit.

4. Procédé de test selon l'une des revendications précédentes, caractérisé par le fait que le test est exécuté avec une tension de lecture accrue.

5. Procédé de test selon l'une des revendications 1 à 3, caractérisé par le fait que le test est exécuté avec une tension de lecture réduite.

6. Dispositif pour la mise en oeuvre du procédé de test pour une mémoire de données (5), qui comporte n cellules de mémoire, qui sont organisées suivant q lignes et p colonnes et dont chacune comporte m bits, et une mémoire de protection associée (6), qui contient k cellules de mémoire de protection, chaque cellule de mémoire de protection étant associée à au moins une cellule de mémoire, et comportant au moins un bit, suivant l'une des revendications 1 à 5, caractérisé par le fait
qu'il est prévu un dispositif de contrôle (4), qui est associé à la mémoire de données (5) et à la mémoire de protection (6),
qu'un mot de données de contrôle destiné à être mémorisé dans la mémoire de données (5) et une adresse de contrôle servant à réaliser l'adressage de la mémoire de données (5) sont transmis au dispositif de contrôle (4), et
qu'un bit de contrôle pour la mémoire de protection (6) est extrait du mot de données de contrôle ou de l'adresse de contrôle.

7. Dispositif pour la mise en oeuvre du procédé de test suivant la revendication 6, caractérisé par le fait qu'il est prévu des moyens qui permettent un enregistrement simultané dans plusieurs cellules de mémoire et dans des cellules de mémoire de protection associées.

8. Dispositif pour la mise en oeuvre du procédé de test suivant la revendication 7, caractérisé par le fait que le dispositif est commandé de façon cadencée et qu'une cellule de mémoire et une cellule de mémoire de protection associée sont testées avec chaque impulsion de cadence.

9. Dispositif pour la mise en oeuvre du procédé de test suivant la revendication 7, caractérisé par le fait qu'il est prévu des moyens qui produisent un modèle en damier aussi bien dans la mémoire de données que, simultanément, dans la mémoire de protection.

10. Dispositif pour la mise en oeuvre du procédé de test suivant la revendication 9, caractérisé par le fait que
- le dispositif est commandé de façon cadencée,
- le dispositif de contrôle comporte des moyens qui adressent simultanément et respectivement toutes les cellules de mémoire des lignes paires et des lignes impaires de la mémoire de données, pour l'enregistrement du mot de données de contrôle,
- le dispositif de contrôle comporte d'autres moyens qui, en même temps que s'effectue l'enregistrement des cellules de mémoire, enregistre alternativement le bit de contrôle extrait et le bit de contrôle, inversé par rapport au précédent, dans les cellules de mémoire de protection associées des lignes paires et des lignes impaires, en commençant par la première cellule de mémoire de protection d'une ligne,
- dans le dispositif de contrôle (4) sont prévus des moyens comparateurs, qui comparent le contenu de chaque cellule de la mémoire de données et le contenu de la mémoire de production associée au mot respectif de données de contrôle et au bit de contrôle qui en est extrait,
- dans le dispositif de contrôle sont prévus d'autres moyens qui produisent un signal d'erreur en cas de non-coïncidence.

11. Dispositif pour la mise en oeuvre du procédé de test suivant l'une des revendications 8 à 10, caractérisé par le fait que des moyens sont prévus pour incrémenter automatiquement l'adresse d'une cellule de mémoire.

12. Dispositif pour la mise en oeuvre du procédé de test suivant l'une des revendications 6 à 11, caractérisé par le fait
- qu'il est prévu un registre de test non effaçable,
- un test des cellules de mémoire et des cellules de mémoire de protection est possible uniquement tant que le registre de test est effacé.
